# EUROPEAN PATENT SPECIFICATION

(11) **EP 1 768 284 B1**
(45) Date of publication and mention of the grant of the patent: **17.06.2009**
(21) Application number: 06380253.2
(22) Date of filing: 22.09.2006
(51) Int. Cl.: H04B 17/00, H04B 7/04

(54) **MIMO channel emulator**
MIMO Kanalemulator
Emulator d'un canal MIMO

(30) Priority: 22.09.2005 ES 200502309
(43) Date of publication of application: 28.03.2007
(73) Proprietor: Telefonica, S.A., 28013 Madrid (ES)
(72) Inventor: Warzanskyj Garcia, Wsewolod, 28043 Madrid (ES); Cucala Garcia, Luis, 28043 Madrid (ES); Olmos Gonzalez, Pedro, 28043 Madrid (ES)
(74) Representative: Primo de Rivera y Urquijo, Jose A.

(56) References cited:
- WO-A-02/41538
- WO-A1-02/069531
- WO-A2-99/21305
- US-A1- 2003 050 020

## Description

### Field of the Invention

The present invention relates to a channel emulator for the characterization of the transmission and reception quality of a radio transceiver equipment or group of equipment incorporating more than one transmitting antenna and more than one receiving antenna, known with the acronym MIMO (Multiple Input Multiple Output).

This invention is applicable in the field of telecommunications and more specifically in the field of mobile communications. The invention is not limited to any specific communications system, be it second generation (2G), third generation (3G), wireless mobile networks (WLAN), or radio communications systems which are still not standardized.

### Background of the Invention

The following process is usually followed in order to measure quality, defined as the value of one or several parameters of transceiver equipment in a laboratory:
1. A test signal is generated with a suitable equipment or test signal transmitting equipment.
2. The test signal is injected to the radio transmitting equipment object of the measurement and also to a test signal receiving equipment.
3. The output radio signal of the radio transmitting equipment object of the measurement is connected to a radio channel emulator.
4. The output of the radio channel emulator is connected to the radio receiving equipment object of the measurement
5. The output of the radio receiving equipment object of the measurement is connected to the test signal receiving equipment.
6. The signal receiving equipment compares the test signal from the test signal transmitter with the signal from the radio receiving equipment object of the measurement. The quality parameter or parameters object of the measurement are quantified from the result of the comparison.

The test signal generator and the test signal receiver can be separate equipment or a single equipment including both the transmitter and the receiver. They are generally commercial instrumentation equipment although they can also be equipment configured by the measurement system operator.

The channel emulator can be a simple attenuator adjusting the output power of the transmitter to the dynamic margin of the receiver, or it can also be a more complex equipment simulating effects such as fading or multiple reflections. Hereinafter this emulator, be it a simple attenuator or a fading or multiple reflection simulator, will be referred to as channel emulator of a pair of antennae.

The known emulators generally carry out the emulation by means of digital signal processing, which consists of transferring the radiofrequency signal to intermediate frequency and digitalizing it and once digitalized, it is processed, numerically implementing the multi-channel propagation feature to subsequently convert the digital signal back to analogical and transfer it to radiofrequency.

Such is the case of the proposition provided by the article "A portable MIMO Testbed and Selected Channel Measurements", a document which analyzes an emulator by means of FPGAs, and therefore with digital signal processing, carried out in the University of Alberta.

Other MIMO system transmission channel emulators are described in the patent application US 2003/0050020 which relates to an emulator which works directly on the analogical signal by means of a channel emulator mixing matrix and taking into account the noise and the possible interfering signals. The elements forming said matrix are phase shifters and combiners, which are not the most suitable if very long propagation delays in time (exceeding one microsecond) are to be included in broadband, nor do they have high insulation levels between the RF signal input and output ports since there are significant electrical coupling mechanisms.

Patent application WO 02/069531 describes a channel simulator for performing channel simulation on a radio frequency signal used in wireless data transfer. The channel simulator is arranged to divide the total band reserved for the signal to be applied to the different channel simulation units into at least two sub-bands and perform channel simulation on signals corresponding to each sub-band. In each channel simulator unit, the simulation is performed by means of a FIR filter.

It is necessary to offer an alternative to the state of the art which covers the gaps therein as regards MIMO transceiver emulator systems incorporating a series of internal elements and structures with more advantageous features as regards efficiency, such as that referring to obtaining very long propagation delays in time, and without the aforementioned drawbacks such as the low insulation level caused by electrical coupling mechanisms.

### Description of the Invention

The present invention relates to an equipment for the measurement of multi-antenna radio transceiver equipment or channel emulator for the characterization of the transmission and reception quality of said transceivers, also referred to as transmission matrix emulator.

The present invention relates to a MIMO channel emulator arranged between at least one multi-antenna radiofrequency transmitter and one multi-antenna radiofrequency receiver comprising a transmission matrix emulator for the simulation of MIMO multi-antenna systems with N+M radiofrequency ports 1, N of which are input ports to be connected to said multi-antenna transmitter and M are output ports to be connected to said multi-antenna receiver.

The emulator proposed by the present invention comprises a series of bidirectional electro-optical converters associated to said N+M radiofrequency ports of said transmission matrix emulator to convert radiofrequency signals from said transmitter and/or from said receiver into optical signals and vice versa, and said transmission matrix emulator is adapted to process said optical signals to carry out the emulation of the NxM radiofrequency paths.

In one embodiment, said transmission matrix comprises a series of variable optical attenuators to adjust some attenuations for each one of the possible paths between its ports in the optical domain and/or a series of variable delay generating elements to adjust some delays for each one of the possible paths between its ports in the optical domain.

The proposed emulator also comprises a series of bidirectional optical couplers associated to said bidirectional electro-optical converters to divide the input optical signals in a series of nominally equal replicas in one direction and to combine the input optical signals in the opposite direction.

In one embodiment the emulator according to the invention is adapted so as to work with different radio interfaces, understanding as such any standardized current or future method used for radio access services of the type of cellular mobile telephony, wireless local networks or wireless systems with wide coverage and/or different electrical bandwidths depending on the physical implementation of the emulator and the features of the optical and electrical elements forming it, with the corresponding conversion of the radiofrequency signals from said interfaces and/or located in said bandwidths into optical signals.

The MIMO channel emulator is also adapted to process, simultaneously and/or individually, different radiofrequency signals and/or with different radio protocols and/or standards.

Other functions to be carried out by the emulator and for which it is adapted consist of adjusting the output power of said transmitter to the dynamic margin of said receiver, simulating signal fading effects and multiple reflection effects.

### Brief Description of the Drawings

These and other features and advantages of the present invention will be understood better from the following detailed description of several embodiments with reference to the attached drawings which must be considered as illustrative and non-limiting and in which:
Figure 1 is a functional diagram of a generic measurement system of radio transceiver equipment with a single pair of antennae,
Figure 2 is a functional diagram of a generic measurement system of a multi-antenna radio transceiver equipment,
Figure 3 is a schematic diagram of the emulator proposed by the present invention for an embodiment, and
Figure 4 is a representative scheme of an optical variable delay line in discrete increments.

### Detailed Description of Several Embodiments

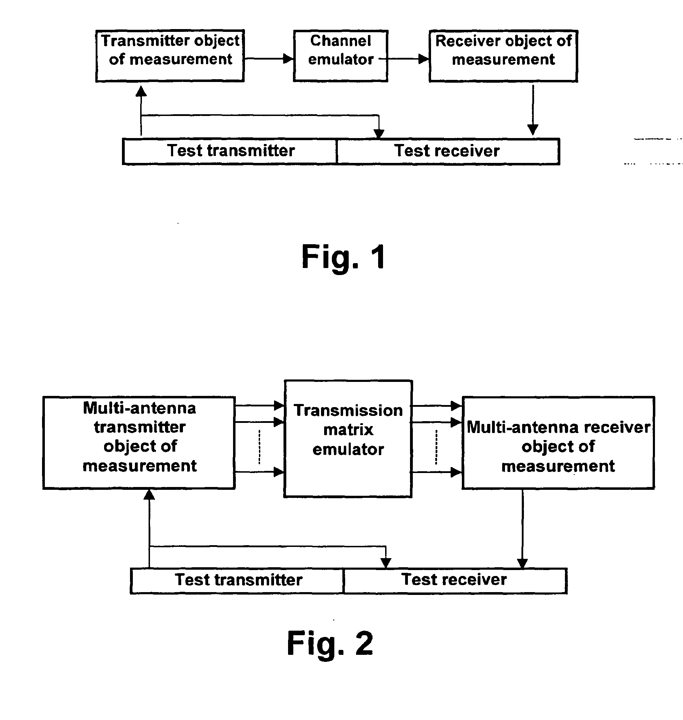

Figure 1 shows a functional diagram of a generic system for measuring radio transceiver equipment with a single pair of antennae, a transmitting antenna and another receiving antenna. It consists of a test transmitter, a test receiver and a channel emulator with a pair of antennae. The figure also shows a transceiver equipment object of the measurement consisting of a transmitter and a receiver.

The measurement process implemented with the emulator object of the invention consists of substituting the channel emulator of a pair of antennae with the transmission matrix emulator which is a multi-channel emulator in the analogical domain carried out by means of radiofrequency and optical techniques. Figure 2 shows a functional diagram depicting the incorporation of the emulator proposed by the present invention in a measurement system which also incorporates a test transmitter and a test receiver for the measurement of a multi-antenna radio transceiver equipment.

The transmission matrix emulator object of this invention, represented as one block in Figure 2, emulates NxM radiofrequency paths with propagation characteristics that can be individually controlled by the operator. The emulation is carried out at an optical level after converting the radiofrequency signals into optical format due to the greater ease with which large propagation delays (exceeding one microsecond) are implemented in broadband at optical level than at the electrical level. It consists of the following parts:
1. A group of N+M radiofrequency ports. There are N ports at one end of the emulator, hereinafter referred to as left end, and M ports at the other end, hereinafter referred to as right end. The ports are bidirectional and physically they are two radiofrequency connectors, one for each transmission direction. In the case of mobile communications, for example, one end would correspond to the side of the base station, node B or access point, and the other end to the terminal end.
2. A group of N+M bidirectional electro-optical converters, each one connected to an emulator port. There are N electro-optical converters at the left end of the emulator and M electro-optical converters at the right end. Each electro-optical converter has two radiofrequency connectors, on for each transmission direction and a single bidirectional optical connector. The radiofrequency connectors are functionally connected to the radiofrequency connectors of an emulator port. They can physically be different connectors or the same connector. The function of the connectors is to convert the radiofrequency signals of the ports of the emulator into optical signals inside the emulator.
3. A group of N optical couplers of the pxM type, where generally p=1, although eventually p>1, for the insertion of additional signals in the emulator or for extracting signal samples. The N optical couplers are connected to the N electro-optical converters of the left end, one coupler per converter. In the left to right propagation direction, the optical signal entering the coupler is divided into M nominally equal replicas. In the right to left propagation direction, each coupler combines the optical signals entering its M ports of its right end. In both transmission directions, the optical insertion losses exceed 10·log(M), expressed in decibels.
4. A group of NxM variable optical attenuators that can be controlled from the control port. There is an optical attenuator connected to each one of the M ports of the right end of each one of the N couplers.
5. A group of NxM variable delay generating elements at discrete intervals. There is an optical variable delay line connected to each one of the NxM optical attenuators. The function of each element is to act as a variable delay line at discrete intervals. The variability of the length is controlled from the control port.
   The NxM optical attenuators can exchange their position with the NxM delay generating elements without any variation in the functionality of the emulator.
6. A group of M optical couplers of p'xN, where generally p'=1, although eventually p'>1, for the insertion of additional signals in the emulator or for extracting signal samples. At their left end, each one of the N ports of each coupler is connected to a pair formed by a variable attenuator and a variable delay generating element. At their right end the M optical couplers are connected to a group of M electro-optical converters, one converter per coupler. In the left to right propagation direction, each coupler combines the optical signals entering its N ports of its left end. In the right to left propagation direction, each coupler divides the signals entering at its right end into N nominally equal replicas. In both transmission directions, the optical insertion losses exceed 10·log(M), expressed in decibels.
7. A control element with an external electrical control port which suitably connected to the variable optical attenuators and the variable delay generating elements control the attenuation and delay of the NxM propagation paths established between the N ports of the left end and the M ports of the right end.
8. A control application residing partially or completely in the control element and also partially or completely in the other control element outside the transmission matrix emulator, such as in the case of a personal computer, for example.
   The control application implements attenuation and delay profiles of propagation paths. It can be configured by the measurement system operator. The attenuation and delay profiles can be programmed following theoretical models or models implementing statistical profiles obtained from measurement results.

### Preferred Embodiment of the Invention

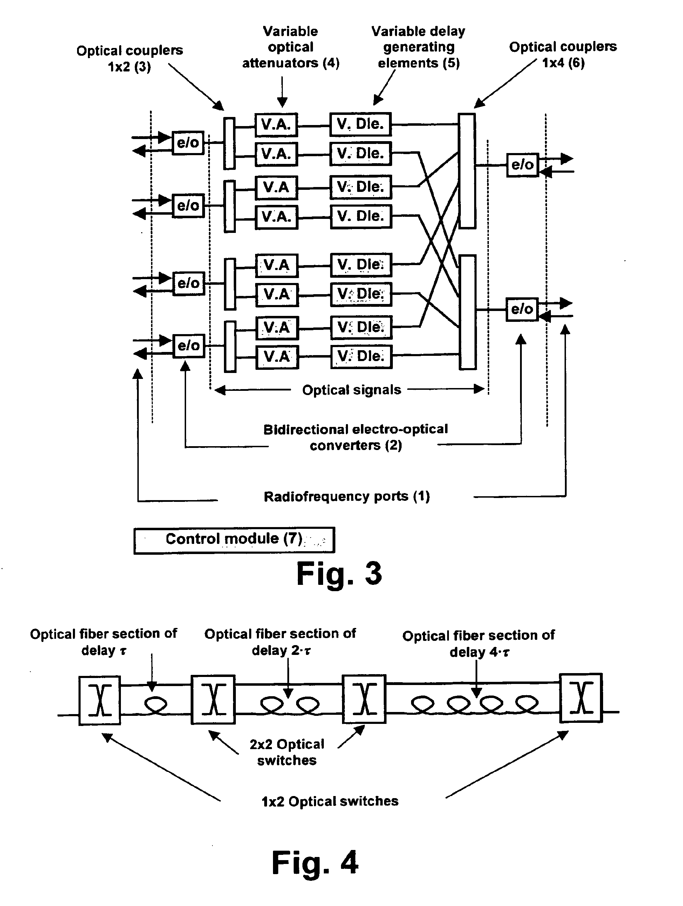

By way of a preferred embodiment, Figure 3 shows a transmission matrix emulator for MIMO multi-antenna systems with four ports at its left end and two ports at its right end. With reference to Figure 3, the transmission matrix emulator for the measurement of MIMO multi-antenna systems is formed by the following functional blocks:
N+M radiofrequency ports 1. Figure 3 distinguishes N=4 and M=2. The radiofrequency ports have two radiofrequency connectors, one for each transmission direction, or only one. In this second case, the ports can incorporate a circulator to have a single connector towards the outside of the emulator and two towards the inside.
N+M bidirectional electro-optical converters 2. They transform the radiofrequency signals present in the ends corresponding to the outside of the equipment into optical signals in the ends corresponding to the inside of the equipment. The conversion of electrical into optical format is achieved either by modulating a laser device by means of current injection or by injecting the radiofrequency signal into an electro-optical modulator connected to a laser device. The conversion of optical into electrical format is achieved by injecting the optical signal into a photodetector device followed by a radiofrequency amplifying element.
N optical couplers 3, of 1xM, which together distribute the N input signals converted to optical format to NxM optical lines. Subsequently, these resulting NxM signals are attenuated and delayed individually in NxM variable attenuators 4 and NxM variable delay generating elements 5 at discrete intervals.
The variable delay generating elements 5 at intervals can be implemented in multiple ways combining different optical devices. An example carried out by means of optical switches and optical fiber sections of different lengths is described, as depicted in Figure 4. In it, fiber sections of different length are connected in cascade by means of 1x2 and 2x2 optical switches, a delay of *i*·τ being able to be obtained, wherein i is a variable integer between 0 and 7, and τ a fixed delay, corresponding to the time it takes for light to be propagated through an optical fiber section of a fixed length, determined at the time the equipment is designed.
M optical couplers 6, of 1xN, combining the signals from the NxM groups of variable attenuators and variable delay lines and routing them towards the M electro-optical converters.
A control element 7 in which a control application 8 resides carrying out at least the following functions: (a) variable configuration in time of the attenuations of the NxM propagation paths of the attenuation matrix (b) variable configuration in time of the NxM delays of the NxM delay-generating elements (c) automatic calibration of the attenuations and delays at the start of each measurement session to adjust the differences in attenuation and delay between the NxM propagation paths (d) presentation of the user menu.

A person skilled in the art could introduce changes and modifications in the described embodiments without departing from the scope of the invention as defined by the enclosed claims.

## Claims

1. A MIMO channel emulator arranged between at least one multi-antenna radiofrequency transmitter and one multi-antenna radiofrequency receiver comprising a transmission matrix emulator for simulating the radio channel of MIMO multi-antenna systems with N+M radiofrequency ports (1), N of which are input ports to be connected to said multi-antenna transmitter and M are output ports to be connected to said multi-antenna receiver, **characterized in that** it comprises a series of bidirectional electro-optical converters (2) associated to said N+M radiofrequency ports (1) of said transmission matrix emulator to convert radiofrequency signals from said transmitter and/or from said receiver into optical signals and vice versa, and **in that** said transmission matrix emulator is adapted to process said optical signals to carry out the emulation of the N×M radiofrequency paths.

2. An emulator according to claim 1, **characterized in that** said transmission matrix emulator comprises a series of variable optical attenuators (4) to adjust some attenuations for each one of the possible paths between its ports in the optical domain.

3. An emulator according to claim 1 or 2, **characterized in that** said transmission matrix emulator comprises a series of variable delay generating elements (5) to adjust some delays for each one of the possible paths between its ports in the optical domain.

4. An emulator according to any of the previous claims, **characterized in that** it comprises a series of bidirectional optical couplers (3) associated to said bidirectional electro-optical converters (2) to divide the input optical signals into a series of nominally equal replicas in one direction and to combine the input optical signals in the opposite direction.

5. An emulator according to any of the previous claims,
**characterized in that** it is adapted to work with different radio interfaces and/or different electrical bandwidths, with the corresponding conversion of the radiofrequency signals from said interfaces and/or located in said bandwidths into optical signals.

6. An emulator according to any of the previous claims, **characterized in that** it is adapted to process, simultaneously and/or individually, different radiofrequency signals and/or with different radio protocols and/or standards.

7. An emulator according to any of the previous claims, **characterized in that** it is adapted to adjust the output power of said transmitter to the dynamic margin of said receiver and/or to simulate signal fading effects and/or to simulate multiple reflection effects.

8. An emulator according to any of the previous claims, **characterized in that** it comprises a control module or element (7) adapted to control at least said transmission matrix emulator.

9. An emulator according to claim 3, **characterized in that** said variable delay generating elements (5) are formed by a series of optical switches connected to optical fiber sections of different length with respect to each other.

## Patentansprüche

1. MIMO-Kanal-Emulator, der zwischen zumindest einem Mehrfachantennen-Radiofrequenzsender und einem Mehrfachantennen-Radiofrequenzempfänger angeordnet ist, umfassend einen Übertragungsmatrixemulator zum Simulieren des Radiokanals von MIMO-Mehrfachantennen-Systemen mit N+M Radiofrequenzports (1), wobei N an den genannten Mehrfachantennen-Sender anzuschließende Eingangsports sind, und M an den genannten Mehrfachantennen-Empfänger anzuschließende Ausgangsports sind, **dadurch gekennzeichnet, dass** er eine Reihe von bidirektionalen elektro-optischen Wandlern (2) umfasst, die den genannten N+M Radiofrequenzports (1) des genannten Übertragungsmatrixemulators zugeordnet sind, um Radiofrequenzsignale von dem genannten Sender und/oder von dem genannten Empfänger in optische Signale und umgekehrt umzuwandeln, und dass der genannte Übertragungsmatrixemulator dazu angepasst ist, um die genannten optischen Signale zum Ausführen der Emulation der N+M Radiofrequenzwege zu verarbeiten.

2. Emulator nach Anspruch 1, **dadurch gekennzeichnet, dass** der genannte Übertragungsmatrixemulator eine Reihe von variablen optischen Abschwächern (4) umfasst, um einige Abschwächungen für jeden der möglichen Wege zwischen seinen Ports in dem optischen Bereich einzustellen.

3. Emulator nach Anspruch 1 oder 2, **dadurch gekennzeichnet, dass** der genannte Übertragungsmatrixemulator eine Reihe von variablen Verzögerungen erzeugenden Elementen (5) umfasst, um einige Verzögerungen für jeden der möglichen Wege zwischen seinen Ports in dem optischen Bereich einzustellen.

4. Emulator nach einem der vorherigen Ansprüche, **dadurch gekennzeichnet, dass** er eine Reihe von bidirektionalen optischen Kopplern (3) umfasst, die den genannten
bidirektionalen elektro-optischen Wandlern (2)
zugeordnet sind, um die optischen Eingangssignale in eine Reihe von nominal gleichen Nachbildungen in einer Richtung aufzuteilen, und um die optischen Eingangssignale in der entgegengesetzten Richtung zu kombinieren.

5. Emulator nach einem der vorherigen Ansprüche, **dadurch gekennzeichnet, dass** er angepasst ist, um mit verschiedenen Radioschnittstellen und/oder verschiedenen elektrischen Bandbreiten zu arbeiten, mit der entsprechenden Umwandlung der Radiofrequenzsignale von den genannten Schnittstellen und/oder der in den genannten Bandbreiten Gelegenen in optische Signale.

6. Emulator nach einem der vorherigen Ansprüche, **dadurch gekennzeichnet, dass** er angepasst ist, um simultan und/oder individuell verschiedene Radiofrequenzsignale und/oder mit verschiedenen Funkprotokollen und/oder -standards zu verarbeiten.

7. Emulator nach einem der vorherigen Ansprüche, **dadurch gekennzeichnet, dass** er angepasst ist, um die Ausgangsleistung des genannten Senders auf die dynamische Spanne des genanten Empfängers anzupassen, und/oder um Signal-Fading-Effekte zu simulieren, und/oder um Mehrfachreflektionseffekte zu simulieren.

8. Emulator nach einem der vorherigen Ansprüche, **dadurch gekennzeichnet, dass** er ein Steuermodul oder -element (7) umfasst, das angepasst ist, um zumindest den genannten Übertragungsmatrixemulator zu steuern.

9. Emulator nach Anspruch 3, **dadurch gekennzeichnet, dass** die genannten variablen Verzögerungen erzeugenden Elemente (5), von einer Reihe von optischen Schaltern gebildet sind, die an Lichtleitfaserabschnitte verschiedener Länge zueinander angeschlossen sind.

## Revendications

1. Émulateur de canal MIMO disposé entre au moins un transmetteur de radiofréquence à plusieurs antennes et un récepteur de radiofréquence à plusieurs antennes comprenant un émulateur de matrice de transmission pour simuler le canal de radio de systèmes à plusieurs antennes MIMO avec N+M ports de radiofréquence (1), N desquels son des ports d'entrée à connecter audit transmetteur à plusieurs antennes et M sont des ports de sortie à connecter audit récepteur à plusieurs antennes, **caractérisé en ce qu'**il comprend une série de convertisseurs électro-optiques bidirectionnels (2) associés audits N+M ports de radiofréquence (1) dudit émulateur de matrice de transmission pour convertir les signaux de radiofréquence dudit transmetteur et/ou dudit récepteur en signaux optiques et inversement, et **en ce que** ledit émulateur de matrice de transmission est adapté pour traiter lesdits signaux optiques pour réaliser l'émulation des NxM voies de radiofréquences.

2. Émulateur selon la revendication 1, **caractérisé en ce que** ledit émulateur de matrice de transmission comprend une série d'atténuateurs optiques variables (4) pour ajuster certaines atténuations pour chacune des voies possibles entre ses ports dans le domaine optique.

3. Émulateur selon la revendication 1 ou 2, **caractérisé en ce que** ledit émulateur de matrice de transmission comprend une série d'éléments de génération de retard variables (5) pour ajuster certains retards pour chacune des voies possibles entre ses ports dans le domaine optique.

4. Émulateur selon l'une quelconque des revendications précédentes, **caractérisé en ce qu'**il comprend une série de coupleurs (3) optiques bidirectionnels associés auxdits convertisseurs électro-optiques bidirectionnels (2) pour diviser les signaux optiques d'entrée en une série de répliques nominalement identiques dans une direction et pour combiner les signaux optiques d'entrée dans la direction opposée.

5. Émulateur selon l'une quelconque des revendications précédentes, **caractérisé en ce qu'**il est adapté pour fonctionner avec différentes interfaces radio et/ou différentes largeurs de bande électriques, avec la conversion correspondante des signaux de radiofréquence des interfaces et/ou situés dans lesdites largeurs de bande dans les signaux optiques.

6. Émulateur selon l'une quelconque des revendications précédentes, **caractérisé en ce qu'**il est adapté pour traiter, simultanément et/ou individuellement, différents signaux de radiofréquence et/ou avec différents protocoles et/ou normes radio.

7. Émulateur selon l'une quelconque des revendications précédentes, **caractérisé en ce qu'**il est adapté pour ajuster la puissance de sortie dudit transmetteur à la marge dynamique dudit récepteur et/ou pour simuler des effets d'évanouissement de signaux et/ou pour simuler des multiples effets de réflexion.

8. Émulateur selon l'une quelconques de revendications précédentes, **caractérisé en ce qu'**il comprend un module ou élément de commande (7) adapté pour commander au moins ledit émulateur de matrice de transmission.

9. Émulateur selon la revendication 3, **caractérisé en ce que** lesdits éléments de génération de retard variables (5) sont formés par une série de commutateurs optiques connectés aux sections de fibre optique de différentes longueurs les unes par rapport aux autres.
